# EUROPÄISCHE PATENTSCHRIFT

(11) **EP 1 919 593 B1**
(45) Veröffentlichungstag und Bekanntmachung des Hinweises auf die Patenterteilung: **06.10.2010**
(21) Anmeldenummer: 06777847.2
(22) Anmeldetag: 19.07.2006
(51) Int. Cl.: B01D 29/11

(54) **VERFAHREN ZUR STABILISIERUNG VON GEFALTETEN FILTERMEDIEN**
METHOD FOR THE STABILISATION OF FOLDED FILTER MEDIA
PROCEDE DE STABILISATION DE MATERIAUX FILTRANTS PLIES

(30) Priorität: 29.07.2005 DE 102005036366
(43) Veröffentlichungstag der Anmeldung: 14.05.2008
(60) Teilanmeldung: 10171833.6
(73) Patentinhaber: MANN + HUMMEL GMBH, 71638 Ludwigsburg (DE)
(72) Erfinder: EISENGRÄBER-PAPST, Jobst, 71726 Benningen (DE); RAPP, Siegfried, 71711 Murr (DE); TRAUTMANN, Pius, 84130 Dingolfing (DE); LAMPERT, Johannes, 71686 Remseck (DE)
(86) Internationale Anmeldenummer: PCT/EP2006/064401
(87) Internationale Veröffentlichungsnummer: WO 2007/012588

(56) Entgegenhaltungen:
- DE-A1- 10 244 925
- DE-A1- 19 737 954
- GB-A- 2 020 995
- US-A- 4 652 285

## Beschreibung

### Technisches Gebiet

Die Erfindung betrifft ein Verfahren zur Stabilisierung von gefalteten Filtermedien.
Filterelemente dieser Art werden meist in Verbindung mit stirnseitig angeordneten Endscheiben als Filterelemente verwendet. Die zick-zack-förmig gefalteten Filtermedien können zur Stabilisierung nach innen auf einen Holkörper beispielsweise ein Mittelrohr abgestützt sein. Bedingt durch die Faltung sind die Faltenspitzen an der, dem Zentrum abgewandten, Außenseite sehr labil. Dies kann bei der Handhabung des Filterelementes im Wartungsfall oder ein Betriebszustand zum Einbeulen oder Einknicken des Filtermediums führen.

### Stand der Technik

Um die Faltung der Filterelemente zu stabilisieren ist aus der DE 102 44 925 ein Verfahren bekannt, in welchem das Filtermedium von einem mit Schmelzkleber getränkten Faden umwickelt wird. Zum Tränken des Fadens mit Schmelzkleber wird der Faden durch ein Schmelzbad gezogen und mittels nachfolgender Fadenführungen auf das Filtermedium gewickelt. Der Faden kommt dabei im plastischen Zustand mit dem Filtermedium in Berührung und haftet so an den äußeren Faltenspitzen an. Es hat sich jedoch gezeigt, dass die Haftfähigkeit zwischen Faltfaden und Faltenspitzen oft nicht ausreichend ist und sich der Faden insbesondere nach Einwirkung von Feuchtigkeit bei geringen Belastungen löst.

### Offenbarung der Erfindung

Aufgabe der Erfindung ist es deshalb ein Verfahren zu schaffen, durch welches die Verbindung zwischen Faden und Faltenspritzen deutlich stabilisiert werden kann. Weiterhin gilt es dadurch ein Filtermedium herzustellen, dass eine erhöhte Stabilität aufweist. Diese Aufgabe wird durch die Merkmale des Anspruchs 1 gelöst.

Die Erfindung beruht auf dem Gedanken, dem sich bereits im plastischen Zustand befindlichen Schmelzkleber durch Einwirkung von thermischer Energie eine bessere Haftfähigkeit gegenüber dem Filtermedium zu verleihen. Üblicherweise wird der Faden mit einem thermisch verflüssigten Schmelzkleber getränkt und durch Fadenführung auf das Filtermedium gewickelt. Der Faden kann beispielsweise rund oder auch einen rechteckigen, bandähnlichen Querschnitt aufweisen. Fäden aus synthetischen Materialien haben sich aufgrund ihrer guten Saugfähigkeit als sehr geeignet erwiesen. Durch die thermische Einwirkung in den sich bereits im plastischen Zustand befindlichen Schmelzkleber wird die Haftfähigkeit des Schmelzklebers gegenüber den Medienfasern und die Eindringtiefe in das Medium verbessert. Dieser Effekt beruht auf der verzögerten Aushärtung des Schmelzklebers. Eine thermische Einwirkung kann beispielsweise durch eine Behandlung mit Hitzereflektoren erfolgen, welche die Abkühlung des Schmelzklebers verzögern.

Erfindungsgemäß wirken die thermischen Mittel auf den bereits mit den Faltenspitzen in Berührung befindlichen Faden ein. Dadurch kann der Abkühlungsvorgang weiter verzögert werden. Davon ausgehend, dass eine feste Zeiteinheit für eine ausreichende Einschmelzung in das Medium nicht unterschritten werden kann, ist es möglich, den Wickelvorgang so zu beschleunigen und damit die Tagzeit zur Stabilisierung des Filtermediums zu verkürzen.

Versuche haben gezeigt, dass die Abzugskraft des Fadens vom Filtermedium im trockenen Zustand um das vierfache und im feuchten Zustand um das zehnfache erhöht werden können. Durch diese verbesserte Haftfähigkeit kann die Anzahl der Fäden bei gleicher Stabilität reduziert werden oder die Stabilität erhöht werden, ohne mehr Fadenmaterial aufzubringen.

Gemäß einer Weiterentwicklung der Erfindung bietet es sich an, den mit Schmelzkleber getränkten Faden mit Heißluft, Infrarotstrahl oder Mikrowellen zu behandeln. Selbstverständlich können alle aus dem Stand der Technik bekannten Wärmequellen als thermische Mittel zum Einsatz kommen. Diese Temperatureinwirkungen auf die Schmelze können nur die bereits vorhandene Wärme des Schmelzklebers erhalten oder diese auch erhöhen. Dadurch wird es in vorteilhafter Weise erlaubt, den Faden über weitere Strecken zu führen und den Schmelzkleber mit optimaler Temperatur auf das Filtermedium aufzubringen, ohne eine Gefahr des Abtropfens zu riskieren.

In einer vorteilhaften Weiterentwicklung der Erfindung sind die thermischen Mittel zwischen der Beschichtung des Fadens mit Schmelzkleber und der Berührung des Fadens mit den Faltenspitzen angeordnet. Hierdurch wird eine gleichmäßige Temperaturführung des Schmelzklebers erreicht, wodurch sich der Energieaufwand reduziert und die Abwärme bzw. die Erhitzung der Umgebung minimiert. Dies ist deshalb von Bedeutung, weil sich der Schmelzpunkt, der üblicherweise verwendeten Schmelzkleber bei ca. 200°C liegt.

Gemäß einer besonderen Ausgestaltung des erfinderischen Verfahrens wird der bereits auf das Filtermedium aufgeschmolzene Faden abgekühlt, wodurch der Schmelzkleber beschleunigt aushärtet. Dies kann beispielsweise mit Anblasen durch Kaltluft erreicht werden. Durch die gezielte Abkühlung des Fadens bzw. des gesamten Filtermediums kann die Tagzeit zur Herstellung des Filtermediums stark reduziert werden. Dies kann insbesondere durch die Erhitzung des Fadens, der sich bereits auf dem Filtermedium befindet, in Verbindung mit erhöhter Wickelgeschwindigkeit und gezielter Abkühlung erreicht werden. In Folge der beschleunigten Aushärtung der Schmelze steht das Filtermedium auch schnell zur weiteren Bearbeitung zur Verfügung.

Gedanke einer weiteren Gestaltung der Erfindung ist es, den mit Schmelzkleber beschichteten Faden durch eine Abstreifblende zu führen. An dieser Abstreifblende wird der Faden auf eine definierte Ausgangsdicke abgestreift. Die abgestreifte Schmelze kann wiederum ins Schmelzbad zurückgeführt werden. Zusätzlich zur Rückgewinnung überflüssiger Schmelze wird durch die Abstreifblende eine Vorspannung des Fadens erreicht, die eine gute Berührung und einen Andruck des Fadens auf die Faltenspitzen gewährleistet.

Gemäß einer weiteren Ausführung wird der Faden schraubenförmig um das Filtermedium gewickelt. Dazu wird die Fadenzufuhr während der Rotation des Filtermediums über eine Lenksrichtung des Filtermediums bewegt, wodurch eine Vorschubbewegung erreicht wird. Durch diese Vorschubbewegung wird eine Gewindesteigung definiert. Alternativ kann die Gewindesteigung bei konstanter Vorschubgeschwindigkeit oder bei stehender Fadenzuführung über eine Lenksbewegung des Filtermediums erreicht werden. Die Einwirkung der thermischen Mittel kann sich dabei über einen Lenksbereich des Filtermediums erstrecken, wodurch mehrere Fäden gleichzeitig erhitzt oder gekühlt werden können. Dadurch kann das gesamte Filtermedium vorteilhaft von einem zusammenhängenden Faden gestärkt werden.

Eine weitere Optimierung sieht vor, die Gewindesteigung des Fadens in unterschiedliche Bereiche aufzuteilen. Beispielsweise kann die Steigung an einem Bereich als Griffschutz mit einer Steigung von ca. 5 bis 8 Millimeter und in einem zweiten Bereich als reine Stabilisierung mit einer Steigung von ca. 30 Millimeter angebracht werden. Um im Bereich der Stirnseite der zylindrischen Außenfläche eine sichere Fixierung des Fadens zu erreichen, kann der Vorschub des Fadens in Lenksrichtung derart minimiert werden, dass sich die Fäden überlappen, bzw. zwischen den Fäden eine geschlossene Schmelzschicht entsteht. Generell besteht auch die Möglichkeit mehrere Fäden parallel als Doppelgewinde aufzubringen.

Die Erfindung betrifft auch ein Filtermedium, das nach dem erfinderischen Verfahren hergestellt ist und aus einem im Wesentlichen hohlzylindrischen, zick-zack-förmig gefalteten Filtermedium besteht. Die Stirnseiten der Zick-Zack-Faltung sind dabei durch Endscheiben abgedichtet und weisen Konturen auf eine dichte Verbindung an korrespondierende Anschlusskonturen auf. Fäden, die zur Stabilisierung des Filtermediums dienen, können sich dabei bis in den Bereich der Endscheiben erstrecken. Die Vorzüge des Filtermediums liegen in der erhöhten Festigkeit der Verbindung zu den stabilisierenden Fäden, dieses ist besonders beim Auftreten von Feuchtigkeit sehr positiv bemerkbar. Eine Gefahr des Ablösens des Fadens bei der Handhabung und Anwendung bzw. durch die Belastung von Pulsationen und der Aufladung von Schmutz ist stark minimiert. Dadurch kann auch die Leistungsfähigkeit des Filtermediums hinsichtlich Lebensdauer, Abscheidegrad und Schmutzkapazität deutlich gesteigert werden.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Ein Ausführungsbeispiel des Verfahrens und des Filtermediums werden anhand der Zeichnungen beschrieben.

Hierbei zeigt:

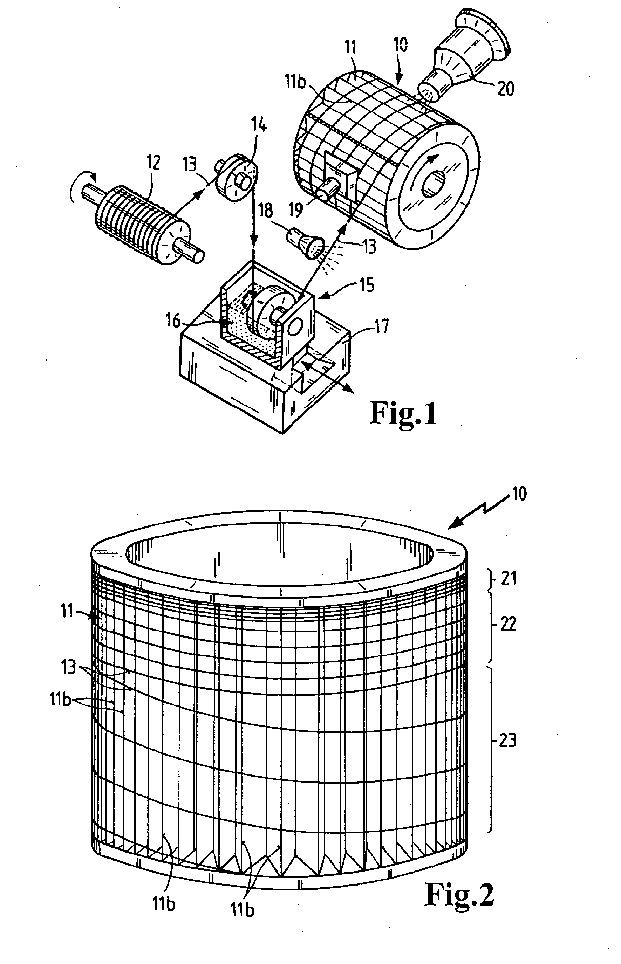

Figur 1 ein schematisch dargestelltes Verfahren und

Figur 1 ein Filterelement mit einem durch dieses Verfahren verstärkte Filtermedium.

### Ausführungsform(en) der Erfindung

In Figur 1 ist ein erfindungsgemäßes Verfahren gezeigt, bei dem ein zick-zack-förmiges Filtermedium 11, welches Teil eines Filterelementes 10 ist, durch einen Faden 13 verstärkt wird. Der Faden 13 ist auf einer Spule 12 gewickelt und wird über eine Fadenführung 14 durch eine Schmelzkleberauftragseinheit 15 gezogen. In der Schmelzkleberauftragseinheit 15 befindet sich der durch Wärmeeinwirkung verflüssigte Schmelzkleber 16. Der Faden 13 dängt sich mit dem Schmelzkleber 16 auf und wir im weiteren Verlauf auf das sich drehende Filtermedium 11 aufgewickelt. Dadurch kommt der Faden 13 mit den Faltenspitzen 11 b des Filtermediums 11 in Berührung. Die Schmelzkleberauftragseinheit 15 ist auf einer Führungseinheit 17 verschiebbar gelagert, wodurch der Faden 13 durch Verschieben in Lenksachse des Filtermediums 11 schraubenförmig aufgewickelt wird. Zwischen der Schmelzkleberauftragseinheit 15 und der Berührung des Fadens 13 mit den Faltenspitzen 11 b, des Filtermediums 11, ist eiri Wärmestrahler 18 angeordnet. Durch die Wärmeeinwirkung des Wärmestrahlers 18 wird die Aushärtung des auf dem Faden 13 befindlichen Schmelzklebers 16 verzögert. Dieser Effekt wird auch durch einen zweiten Wärmestrahler 19 erreicht, der den Schmelzkleber 16 noch erhitzt, wenn er sich bereits in Berührung mit den Faltenspitzen 11 b befindet. Der zweite Strahler 19 kann dabei über einen Lenksbereich des Filtermediums 11 wirken und mehrere Fäden gleichzeitig erwärmen. Um den auf dem Faden 13 befindlichen Schmelzkleber 16 gezielt abzukühlen, ist ein Kühlgebläse 20 gezeigt, welches ein beschleunigtes Aushärten des Schmelzklebers 16 bewirkt.

Figur 2 zeigt ein Filterelement 10 mit einem Filtermedium 11, welches durch das gezeigte Verfahren hergestellt ist. Der Faden 13 ist auf dem Filtermedium 11 aufgewickelt und mit den Faltenspitzen 11 b verklebt. Der schraubenförmig aufgewickelte Faden 13 weist verschiedene Gewindesteigungen auf. Im an der Stirnseite angrenzenden Verriegelungsbereich mit minimaler oder keiner Gewindesteigung überlappt sich der Faden 13. In einem Griffschutzbereich 22 ist die Gewindesteigung derart abgestimmt, dass eine sichere Handhabung des Filterelementes ohne die Gefahr eines Eindrückens möglich ist. Im Stabilisierungsbereich 23 ist die Gewindesteigung am größten und dient lediglich der radialen Stabilisierung der Falten des Filtermediums 11.

## Patentansprüche

1. Verfahren zur Stabilisierung von gefalteten Filtermedien durch einen Faden, insbesondere geeignet zur Verbesserung der Haftung des Fadens am Filtermedium, wobei der Faden mit einem Schmelzkleber beschichtet wird und im plastischen Zustand über die Faltenspitzen aufgerollt wird, **dadurch gekennzeichnet, dass** der plastische Zustand des beschichteten Fadens durch thermische Mittel aufrechterhalten wird, wobei die thermischen Mittel zur Verzögerung des Abkühlungsvorganges auf den sich mit den Faltenspitzen in Berührung befindlichen Faden einwirken.

2. Verfahren nach Anspruch 1, **dadurch gekennzeichnet, dass** die thermischen Mittel Heißluft, Infrarotstrahlung oder Mikrowellen sind.

3. Verfahren nach einem der vorherigen Ansprüche, **dadurch gekennzeichnet, dass** der auf den Faltenspitzen aufgerollte Faden im weiteren Bereich abgekühlt wird.

4. Verfahren nach einem der vorherigen Ansprüche, **dadurch gekennzeichnet, dass** der mit plastifiziertem Schmelzkleber beschichtete Faden durch eine Abstreifblende geführt wird.

5. Verfahren nach einem der vorherigen Ansprüche, **dadurch gekennzeichnet, dass** der Faden schraubenförmig um das Filtermedium gewickelt wird.

6. Verfahren nach Anspruch 5, **dadurch gekennzeichnet, dass** durch einen unterschiedlichen Fadenvorschub oder unterschiedliche Wickelgeschwindigkeit eine unterschiedliche Steigung der Schraubenform erreicht wird.

## Claims

1. Method for stabilizing pleated filter media by means of a thread, in particular suitable for improving the adherence of the thread at the filter medium, the thread being coated with a hot-melt adhesive and wound over the pleat peaks in a plastic state, **characterized in that** the plastic state of the coated thread is maintained by thermal means, the thermal means having an impact on the thread in contact with the pleat peaks for slowing down the cooling process.

2. Method according to claim 1, **characterized in that** the thermal means are hot air, infrared radiation or microwaves.

3. Method according to one of the above claims, **characterized in that** the thread wound around the pleat peaks is cooled down in the larger area.

4. Method according to one of the above claims, **characterized in that** the thread coated with plasticized hot-melt adhesive is guided through a wiping orifice.

5. Method according to one of the above claims, **characterized in that** the thread is wound helically around the filter medium.

6. Method according to claim 5, **characterized in that** by means of a different thread feed or different angular velocity a different pitch of the helical shape is achieved.

## Revendications

1. Procédé de stabilisation de milieux filtrants par un fil, notamment approprié à améliorer l'adhésion du fil au milieu filtrant, le fil étant revêtu d'une colle thermofusible et étant enroulé, à l'état plastique, sur les pointes des plis, **caractérisé en ce que** l'état plastique du fil revêtu est conservé par des moyens thermiques, les moyens thermiques agissant en vue du retardement du processus de refroidissement sur les fils étant en contact avec les pointes des plis.

2. Procédé selon la revendication 1, **caractérisé en ce que** les moyens thermiques sont de l'air chaud, des rayons infrarouges ou des micro-ondes.

3. Procédé selon l'une des revendications précédentes, **caractérisé en ce que** le fil enroulé sur les pointes des plis est refroidi dans la partie plus large.

4. Procédé selon l'une des revendications précédentes, **caractérisé en ce que** le fil revêtu de colle thermofusible plastifiée est guidé à travers un orifice racleur.

5. Procédé selon l'une des revendications précédentes, **caractérisé en ce que** le fil est enroulé en forme de vis autour du milieu filtrant.

6. Procédé selon la revendication 5, **caractérisé en ce que**, par une avance variable du fil ou une vitesse angulaire variable, un pas variable de la forme de vis est atteint.
